# EUROPEAN PATENT APPLICATION

(11) **EP 1 655 187 A2**
(43) Date of publication of application: **10.05.2006**
(21) Application number: 05023900.3
(22) Date of filing: 02.11.2005
(51) Int. Cl.: B60R 22/03

(54) **Tongue retrieval assisting device and seatbelt apparatus using the same**

(30) Priority: 05.11.2004 JP 2004322219
(71) Applicant: TAKATA CORPORATION, Minato-ku, Tokyo 106-8510 (JP)
(72) Inventor: Sugiyama, Tadashi, Minato-ku Tokyo 106-8510 (JP); Nanbu, Masashi, Minato-ku Tokyo 106-8510 (JP)
(74) Representative: Banzer, Hans-Jörg

(57) **Abstract**

In order to provide a tongue retrieval assisting device capable of suppressing force applied to a conveying device itself and an attaching portion of the conveying device, when an occupant contacts the conveying device, the conveying device is attached through an elastic mount. A rod (17) for conveying a tongue (5) to a tongue retrieval position is telescopically and extendably composed of several rod members (14, 15, 16). The rod member (14) having a maximum diameter is attached to an attaching bracket (26) of the rod side. The attaching bracket of the rod side (26) is elastically attached to an attaching bracket (27) of the motor vehicle seat side through rubber mounts (28, 29, 30, 31). Force applied to the rod (17) itself or an attaching portion of the rod (17) can be suppressed even when an occupant contacts the conveying device.

## Description

The present invention relates to a seatbelt apparatus installed in a motor vehicle such as an automobile and fastens and protects an occupant by a seatbelt, and relates to a tongue retrieval assisting device to assist the occupant in retrieving a tongue supported by the seatbelt and latched with a buckle fixed to a body of a vehicle, or the like, and the seatbelt apparatus using the tongue retrieval system.

Conventionally, seatbelt apparatuses attached to a seat of motor vehicles such as an automobile, or the like are provided for protecting an occupant by fastening the occupant with a seatbelt so as to prevent the occupant from being thrown out of the seat in an emergency due to great deceleration experienced by the motor vehicle because of a collision or the like.

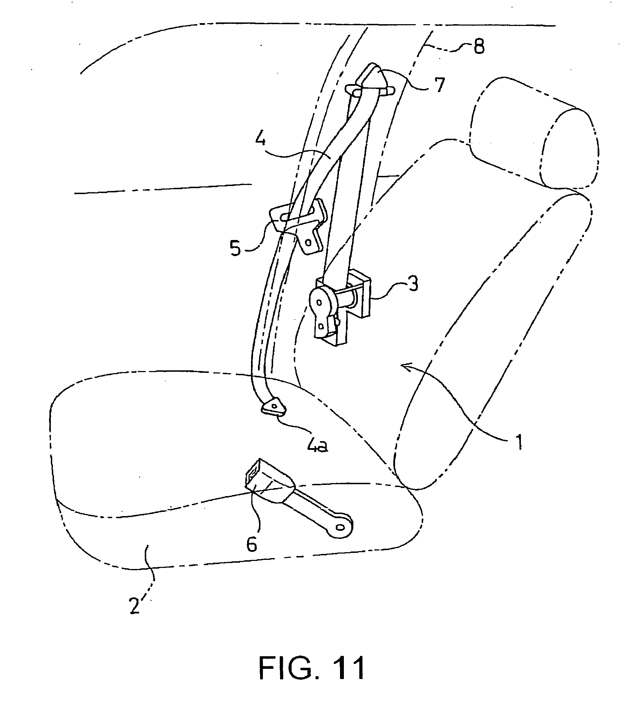

As one conventional seatbelt apparatus, for example, a three-point-type seatbelt apparatus, as shown in FIG. 11, is known. In FIG. 11, reference numeral 1 denotes the seatbelt apparatus installed in a motor vehicle seat 2. Reference numeral 3 denotes a seatbelt retractor 3, fixed to a body of a vehicle adjacent to the motor vehicle seat 2, for withdrawably retracting the seatbelt 4 in a normal state, but which does not allow the seatbelt 4 to be withdrawn in an emergency. Reference numeral 5 denotes a tongue, slidably supported by the seatbelt 4. Reference numeral 6 denotes a buckle, fixed to the motor vehicle seat 2 or a body of a vehicle, with which the tongue 5 is latched, and reference numeral 7 denotes a belt guide, attached to an upper part of a side portion of the motor vehicle, such as a center pillar 8 or the like, guiding the seatbelt 4 withdrawn from the seatbelt retractor 3. In addition, a belt anchor portion 4a of the tip end of the seatbelt 4 withdrawn from the seatbelt retractor 3 is fixed to the motor vehicle seat 2 or a body of the vehicle.

In the thus configured seatbelt apparatus 1, in a case when the occupant wears the seatbelt 4, the occupant is seated on the motor vehicle seat 2, withdraws the seatbelt 4 from the seatbelt retractor 3, and takes his/her hand off from the tongue 5 after latching the tongue 5 with the buckle 6. The excessively withdrawn seatbelt 4 is then retracted by the seatbelt retractor 3 and slack of the seatbelt 4 is eliminated. The occupant is thus fastened by the seatbelt 4.

Meanwhile, in such a seatbelt apparatus 1, the seatbelt 4 is retracted by the seatbelt retractor 3 with almost no slack when the seatbelt 4 is not worn by the occupant. Accordingly, the seatbelt 4 positioned between the belt guide 7 attached to, for example, the center pillar 8 and the belt anchor portion 4a of the seatbelt 4 fixed to the motor vehicle seat 2 is positioned nearly along the center pillar 8. Therefore, the tongue 5 supported by the seatbelt 4 is positioned adjacent to the center pillar 8.

However, when the tongue 5 is thus positioned, and when the seatbelt 4 is not worn by the occupant while the occupant is seated on the motor vehicle seat 2, the tongue 5 is positioned at a side of, and behind the occupant. As a result, when the occupant seated on the motor vehicle seat 2 tries to take the tongue 5 by hand to put on the seatbelt 4, the occupant is bothered to look behind and is forced to take the tongue 5 in an unstable posture. Consequently, there are problems that the tongue 5 is difficult to be retrieved and a handling operation for the tongue 5 to latch with the buckle 6 is bothersome.

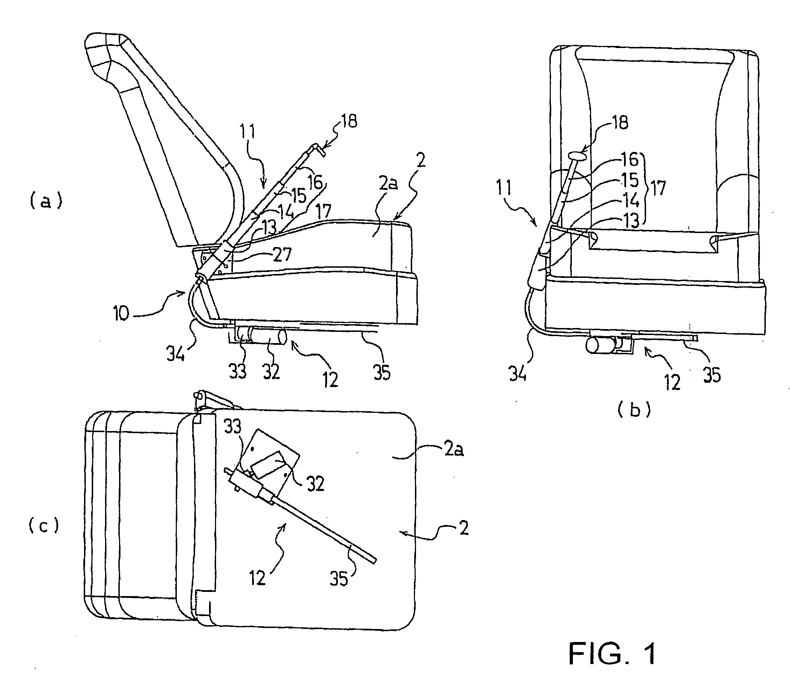

In consideration of the problem mentioned above, a seatbelt presenter apparatus is proposed in, for example, Publication of Japanese Registered Utility Model No. 61-176047 (see, e.g., the Claims of the Utility Model Application and FIG. 1 thereof). In the seatbelt presenter apparatus proposed above, an occupant seated on a motor vehicle seat is enabled to easily take out a tongue and the handling operation of the tongue can be simplified, when the occupant wears the seatbelt.

The seatbelt presenter disclosed in Japanese Registered Utility Model No.61-176047 includes a telescopic-type rod which is retractably provided thereto, a belt hanger portion formed such that a webbing is loosely fit to a tip end of the rod, and a motor to retract the rod. Further, when the occupant takes a ride in a motor vehicle and turns on an ignition switch after closing a door, the rod is extended by a rotation of the motor and the belt hanger portion is protruded forward. As a result, the seat belt loosely fit at the belt hanger portion is also advanced forward and the tongue supported by the seatbelt is thereby guided toward a position within reach of the occupant. When the occupant grips the tongue by hand and inserts the tongue into a buckle to latch with, or even when the occupant does not take out the tongue, the motor is rotated in a reverse direction and the rod is retracted when a predetermined time has elapsed after the belt hanger portion has been disposed to protrude forward.

However, in the seatbelt presenter disclosed in Japanese Registered Utility Model No. 61-176047, in a state in which the rod is extended and the belt hanger portion protrudes forward, because the extended rod is positioned at the side of, and adjacent to the occupant, it is possible that the occupant gets into touch with the rod and a relatively large force is applied to the rod itself and an attaching portion of the rod.

The present invention is made in light of the above problems and the object of the invention is to provide a tongue retrieval assisting device capable of suppressing force applied to a conveying device itself and an attaching portion of the conveying device even when an occupant gets into touch with the conveying device.

Another object of the present invention is to provide a seatbelt apparatus in which the seatbelt is adapted to be easily worn by an occupant and no particular problem is caused even when the occupant gets into touch with the conveying device.

According to the present invention, this object is achieved by a tongue retrieval assisting device according to Claim 1 and a seatbelt apparatus according to Claim 9. The dependent Claims define preferred or advantageous embodiments of the invention.

To solve the above-described problems, a tongue retrieval assisting device according to the present invention conveys a tongue slidably supported by a seatbelt to a tongue retrieval position set in front of an occupant seated on a motor vehicle seat, wherein a conveying device for conveying the tongue to the tongue retrieval position is attached through an elastic mount.

Further, the elastic mount may be a rubber mount.

Furthermore, the conveying device may be a rod telescopically and extendably composed of a plurality of rod members.

Moreover, a seatbelt apparatus according to the present invention includes at least a seatbelt for fastening an occupant, a seatbelt retractor mounted on a motor vehicle for constantly urging the seatbelt in a direction for retracting the seatbelt, a tongue slidably supported by the seatbelt, and a buckle mounted on the motor vehicle, being latched with the tongue inserted thereinto, wherein the seatbelt apparatus includes the tongue retrieval assisting device according to any one embodiment of the invention.

In the thus configured tongue retrieval assisting device according to the present invention, the conveying device is elastically supported by an elastic mount. Therefore even when external force is applied to the conveying device by an occupant contacting the conveying device or the like, the force applied to the conveying device itself and an attaching portion of the conveying device can be absorbed to be small by the elastic mount. In particular, in a case when the external force is applied to the conveying device from inside of the motor vehicle seat, which is considered to be the most frequent case, the force applied to the conveying device itself and the attaching portion can be efficiently absorbed.

Further, in the seatbelt apparatus according to the present invention, by applying the tongue retrieval assisting device of the invention to the seatbelt apparatus, the force applied to the conveying device can be reduced by the elastic mount even when external force is applied to the conveying device. Thus no particular problem is caused even by an occupant's touch on the conveying device when the occupant is performing inserting-and-latching operations between the tongue and the buckle, thereby allowing the occupant to wear the seatbelt easily.

Hereinbelow, the best mode for carrying out the invention will be explained with reference to the drawings.
FIGs. 1(a) through 1(c) are schematic views illustrating an entire embodiment of a tongue retrieval assisting device according to the present invention, in which FIG. 1(a) is an illustration showing a motor vehicle seat, looking from left, FIG. 1(b) is an illustration showing the motor vehicle seat looking from front, and FIG. 1(c) is an illustration showing the motor vehicle seat, looking from below;
FIGs. 2(a) and 2(b) are enlarged illustrations showing the tongue retrieval assisting device of the embodiment shown in FIGs. 1(a) through 1(c), looking from left, in which FIG. 2(a) is an illustration showing a rod in a state of being retracted, and FIG. 2(b) is an illustration showing the rod in a state of being extended;
FIG. 3(a) is an illustration showing a tongue receiving portion in a state of being attached to the rod of the embodiment shown in FIGs. 1(a) through 1(c), FIG. 3(b) is a plan view showing the tongue receiving portion, and FIG. 3(c) is a side view showing the tongue receiving portion;
FIG. 4 is a perspective view illustrating a rod attached by rubber-mounts;
FIG. 5 is a view explaining a process by which a tongue receiving plate receives the tongue;
FIG. 6 is a flowchart explaining a motor control of the tongue retrieval system according to an embodiment;
FIG. 7 is a flowchart explaining a motor control of the tongue retrieval system according to another embodiment;
FIG. 8 is a perspective view partially showing a tongue retrieval assisting device according to another embodiment of the present invention;
FIG. 9 is a perspective view showing the tongue receiving portion of the embodiment shown in FIG. 8;
FIG. 10 is an illustration showing a state in which a gripping portion of the tongue is mounted on the tongue receiving portion of the embodiment shown in FIG. 8; and
FIG. 11 is an illustration showing a conventional and commonly used three-point-type seatbelt apparatus.

FIGs. 1(a) through 1(c) schematically illustrate an embodiment of an entire tongue retrieval assisting device with respect to the present invention. FIG. 1(a) is an illustration of a motor vehicle seat looking from the left; FIG. 1(b) is an illustration of the motor vehicle seat looking from the front; and FIG. 1(c) is an illustration of the motor vehicle seat looking from below. Further, in an explanation of each of the embodiments described below, the same numerals denote the same element in the embodiment explained earlier, and the same numerals denote the same element in the related art, shown in FIG. 11 and described earlier, and a detailed explanation is therefore omitted. In addition, numerals not shown in the drawings used for the explanation are substituted by the numerals shown in the other drawings.

As illustrated in FIGs. 1(a) through 1(c), the tongue retrieval assisting device 10 in this embodiment is provided with a tongue conveying section 11 disposed at the motor vehicle seat 2 at the left side, which conveys a tongue 5 to a tongue retrieval position, and a drive section 12 that operates the tongue conveying section 11.

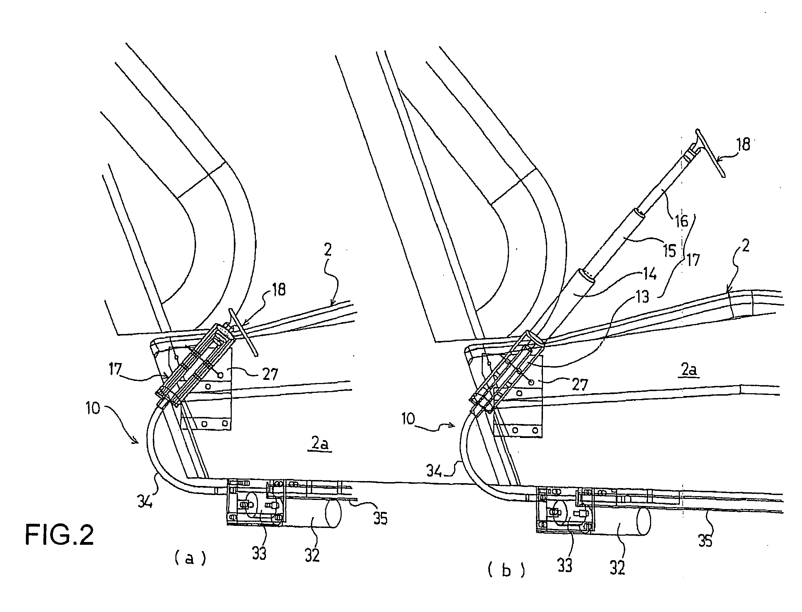

As illustrated in FIGs. 2(a) and 2(b), the tongue conveying section 11 is provided with a rod 17, retractably composed of four cylindrical rod members 13, 14, 15, and 16 in a telescopic structure (corresponding to the transfer device of the present invention) and a tongue receiving member 18 provided at a tip end of a rod member 16 having the minimum diameter of the four cylindrical rod members.

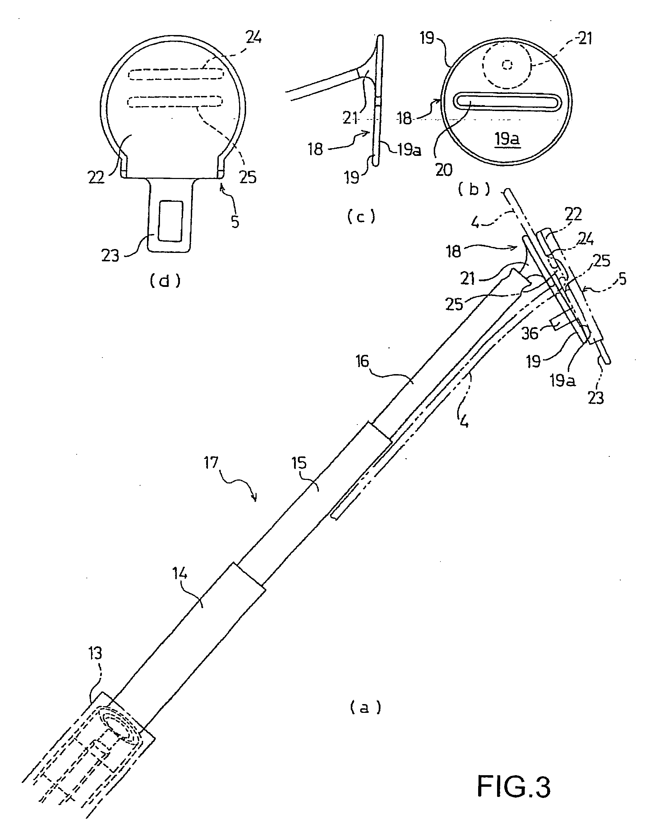

As shown in a magnified view in FIGs. 3(a) through 3(c), the tongue receiving member 18 includes a tongue receiving plate 19 having a shape of an approximately circular disc and the tongue 5 is mounted on a tongue receiving face 19a of the tongue receiving plate 19 and conveyed to the tongue retrieval position. At a center of the tongue receiving plate 19, an elongated penetration hole 20 extending in a radial direction is drilled and a seatbelt 4 is slidably penetrated in the penetration hole 20. At a face opposite to the tongue receiving face 19a of the tongue receiving plate 19, an attaching portion 21 is provided at an eccentric position in the face and is attached to a tip end of the rod member 16 having the minimum diameter. In this case, the tongue receiving plate 19 is configured to extend downward from the attaching portion 21.

The tongue 5 mounted on the tongue receiving plate 19 is composed of a gripping portion 22 to be gripped by an occupant by hand, which is an arc-shaped plate having a diameter slightly larger than that of the tongue receiving plate 19, and a latching portion 23 that projects from the gripping portion 22 and is inserted and latched with the buckle 6, as shown in FIG. 3(d). In the gripping portion 22, a pair of holes 24 and 25 extending in the radial direction, positioned parallel to each other and forming a link with each other at an opposite of the gripping portion 22, shown in FIG. 3(d) is drilled. The seatbelt 4, lowered from a belt guide 7 is inserted into the hole 24 formed at a position farther from the latching portion 23 and withdrawn from the elongated hole 25 formed at a position closer to the latching portion 23, and is slidably inserted into the tongue 5.

In addition, as illustrated in FIG. 3(a) by a two-dot chain line, the tongue 5 is mounted on the tongue receiving plate 19 at the gripping portion 22 such that the latching portion 23 is directed downward. At this time, part of the gripping portion 22 between a pair of holes 24 and 25, which is closer to the elongated hole 25 is pressed to the tongue receiving plate 19 by a belt retracting force caused by a seatbelt retractor 3. Thereby, a mounting for the gripping portion to the tongue receiving plate 19 is stably operated. In addition, because the tongue receiving plate 19 has a relatively wide flat face, a mounting operation of the tongue 5 onto the tongue receiving member 18 is made stable.

Further, because a diameter of the tongue receiving plate 19 is set slightly smaller than the diameter of the gripping portion 22 of the tongue 5, the outer dimension of the tongue receiving plate 19 is smaller than that of the gripping portion 22. As a result, when the gripping portion 22 of the tongue 5 is mounted on the tongue receiving plate 19, a peripheral edge of the gripping portion 22 of the tongue 5 protrudes outward from that of the tongue receiving plate 19. Thereby, when the occupant grips the gripping portion 22 of the tongue 5 by hand, the tongue receiving plate 19 is prevented from being gripped together with the gripping portion 22.

As for the telescopic structure of the rod 17 composed of four cylindrical rods 13, 14, 15, and 16, the heretofore known telescopic structure can be used. The detailed explanation thereof is therefore omitted. In addition, the rod 17 can be set to a retracted state, shown in FIG. 2(a) and an extended state, shown in FIG. 2(b). In the retracted state of the rod 17, the tongue receiving member 18 is positioned at a storing position at the left side behind the motor vehicle seat 2, and the tongue receiving member 18 and the rod 17 do not disturb the occupant that is getting in or out of the motor vehicle. Further, in the extended state of the rod 17, the tongue receiving member 18 is positioned slightly inward of the side of the motor vehicle seat 2, as illustrated in FIG. 1(b). The tongue receiving member 18 in the extended state of the rod 17 is positioned in front of the chest or the waist of the occupant seated on the motor vehicle seat 2, namely, such that the occupant can take out the tongue 5 mounted on the tongue receiving member 18 at the tongue retrieval position by hand with ease. Further, the number of the rod members is not limited to four and is appropriately determined.

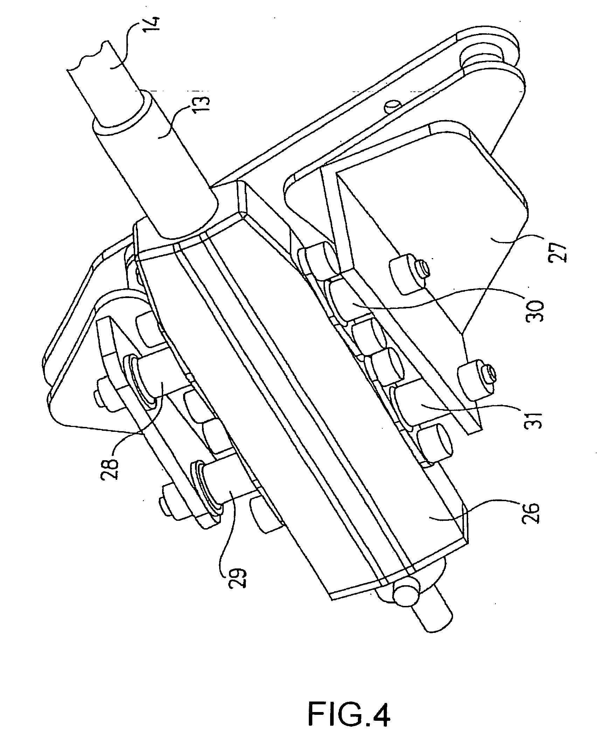

As illustrated in FIG. 4, the rod member 13 having maximum diameter is attached to an attaching bracket 26 of the rod side. The attaching bracket 26 is elastically attached to an attaching bracket 27 of the motor vehicle seat side through four rubber-mounts 28, 29, 30, and 31. In addition, the attaching bracket 27 is attached to the left side of the rear part of the motor vehicle seat 2, as illustrated in FIGs. 1(a), 2(a) and 2(b). In this case, the attaching brackets 26 of the rod side and the attaching bracket 27 of the motor vehicle seat side are attached to the motor vehicle seat 2, such that when the rod 17 is extended, the tongue receiving member 18 comes to the tongue retrieval position described above.

Further, because the rod 17 is elastically supported by the four rubber-mounts 28, 29, 30, and 31, force applied to the rod 17 itself, the tongue receiving member 18 itself, and the attaching portion of the rod 17 is buffered and a relatively large force does therefore not affect these elements even when the occupant gets into touch with the rod 17 or the tongue receiving member 18 in a state in which the rod 17 is extended and the force is applied to the rod 17 or the tongue receiving member 18. In this case, even when the force is applied to the rod 17 or the tongue receiving member 18 from any direction, force applied to the rod 17 itself, the tongue receiving member 18 itself, and the attaching portion of the rod 17 is assuredly buffered by the four rubber-mounts 28, 29, 30, and 31. In particular, when the force considered to be most frequently applied is applied to the rod 17 or the tongue receiving member 18 from inside of the motor vehicle seat 2, the force that is applied to the rod 17 itself, the tongue receiving member 18 itself, and the attaching portion of the rod 17 is more efficiently buffered.

As illustrated in FIGs. 1(a) through 1(c) and FIGs. 2(a) and 2(b), the drive section 12 is provided at a lower part of the motor vehicle seat 2. The drive section 12 is provided with a motor 32 attached to a lower part of the seat cushion 2a in the motor vehicle seat 2, a drive gear 33 to which rotation drive force of the motor 32 is transmitted with reduced speed, a flexible rod extension/retraction cable 34 , which is connected to the rod member 16 having the minimum diameter passing through an inside of the four rod members 13, 14, 15, and 16, and has teeth (not shown) constantly engaged with the drive gear 33, a cable guide 35 for guiding the rod extension/retraction cable 34 extendably provided in a slanting manner from a left side of the rear part to a right side of the front part of a lower face of the seat cushion 2a of the motor vehicle seat 2. A heretofore known power transmission structure can be used for the power transmission structure in which the rotation drive force of the motor 32 is applied to the rod extension/retraction cable 34. Accordingly, the detailed explanation is omitted.

When the motor 32 is rotated in a direction in which the rod extension/retraction cable 34 is released toward a rod 17 side, the rod 17 is extended in a telescopic fashion. On the contrary, when the motor 32 is rotated in a direction in which the rod extension/retraction cable 34 is retracted toward a cable guide 35 side, rod 17 is retracted in a telescopic fashion.

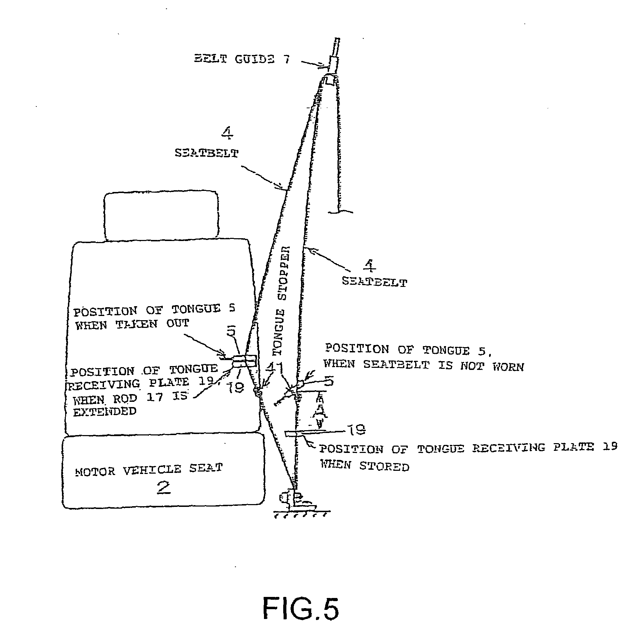

As illustrated in FIG. 5, when the seatbelt 4 is not worn, the tongue 5 gets into touch with a tongue stopper 41 and is stopped, i.e., the tongue 5 is not lowered further, similar to the case in the heretofore known seatbelt apparatus. On the other hand, when the tongue retrieval assisting device 10 is not in operation, the tongue receiving plate 19 is at the storing position. In this condition, a distance A between the position of the tongue 5 when the seatbelt 4 is not worn, and the position of the tongue receiving plate 19 at the storing position is set smaller than the extending amount of the rod 17, namely, the distance between the tongue receiving plate 19 at the storing position and the tongue receiving plate 19 at the tongue retrieval position. Thereby, when the rod 17 is extended together with the operation of the tongue retrieval assisting device 10, the tongue 5 can be assuredly received by the tongue receiving plate 19. In this case, the size of the penetration hole 20 of the tongue receiving plate 19 is set such that the tongue stopper 41 is able to smoothly pass through the penetration hole 20 while the rod 17 is extended.

Consequently, when the rod 17 is extended so that the tongue receiving member 18 is transferred from the storing position to the tongue retrieval position, the tongue receiving plate 19 of the tongue receiving member 18 conveys the tongue mounted thereupon to the tongue retrieval position.

Thus, in accordance with the tongue retrieval assisting device 10 of this embodiment, when the tongue receiving member 18 is transferred from the storing position to the tongue retrieval position for the seatbelt 4 to be worn by the occupant, the tongue 5 is conveyed to the tongue retrieval position by the tongue receiving member 18. As a result, the occupant seated on the motor vehicle seat 2 can retrieve the tongue 5 by hand with ease. Therefore, at a time when the seatbelt 4 is worn, easiness of handling the tongue 5 by the occupant can be sufficiently improved and the tongue can be assuredly retrieved.

Further, when the passenger is seated on the motor vehicle seat 2 earlier than the driver and tries to wear the seatbelt 4, the tongue 5 can be assuredly conveyed to the tongue retrieval position by setting the tongue receiving member 18 to the tongue retrieval position. Accordingly, in comparison with the case described in Japanese Registered Utility Model No. 61-176047, easiness of handling operation of the tongue 5 by the passenger can be improved and assuredness of retrieval operation of the tongue by the passenger can also be improved.

Furthermore, because the outer shape of the tongue receiving plate 19 of the tongue receiving member 18 is made smaller than that of the gripping portion 22 of the tongue 5, the peripheral edge of the gripping portion 22 of the tongue 5 projects outwardly from the peripheral edge of the tongue receiving plate 19 when the gripping portion 22 of the tongue 5 is mounted on the tongue receiving plate 19. As a result, the occupant can grip the gripping portion 22 by hand without gripping the tongue receiving plate 19 together when the occupant grips the gripping portion 22 of the tongue 5. Accordingly, the tongue 5 can be further easily and assuredly retrieved.

Moreover, because the rod 17 is elastically supported by four rubber-mounts 28, 29, 30, and 31, even when an external force is applied to these rods or the tongue receiving member 18 resulting, e.g., from that the occupant gets into touch with the rod 17, or the tongue receiving member 18, or the like, the force applied to the rod 17 itself, tongue receiving member 18 itself, and the attaching portion of the rod 17 can be buffered to be smaller by the rubber-mounts 28, 29, 30, and 31. In this case, even when the external force is applied to the rod 17 or the tongue receiving member 18 from any direction, the force applied to the rod 17 itself, tongue receiving member 18 itself, and the attaching portion of the rod 17 is assuredly buffered and suppressed by the four rubber-mounts 28, 29, 30, and 31. In particular, when the force, considered to be most frequently applied, is applied to the rod 17 or the tongue receiving member 18 from inside of the motor vehicle seat 2, the force applied to the rod 17 itself, tongue receiving member 18 itself, and the attaching portion of the rod 17 is further effectively buffered.

Furthermore, because the tongue retrieval assisting device 10 is attached to the motor vehicle seat 2, even when the position of the motor vehicle seat 2 is adjusted in back-and-front direction by the occupant, the tongue retrieval assisting device 10 is moved together with the back-and-front movement of the motor vehicle seat 2. Therefore, the tongue retrieval position relative to the motor vehicle seat 2 is not changed and the tongue retrieval position relative to the occupant seated on the motor vehicle seat 2 is kept approximately constant.

Further, because easiness of inserting and latching operation for the tongue 5 with the buckle 6 is improved by applying the tongue retrieval assisting device 10 of this embodiment to the seatbelt apparatus, the seatbelt 4 can be thereby easily worn by the occupant. In addition, according to the seatbelt apparatus, even when external force is applied to the rod 17 due to an occupant's touch on the conveying device or the like, the force applied to the rod 17 can be reduced by the four rubber mounts 28, 29, 30, 31, and therefore, no particular problem is caused even when the occupant gets into touch with the rod 17 when the occupant is performing inserting-and-latching operation between the tongue and the buckle. That is, the seatbelt 4 can thereby be worn more easily by the occupant.

Meanwhile, in the tongue retrieval assisting device 10 of this embodiment, a tongue retrieval system is configured such that the tongue receiving member 18 is automatically set to the tongue retrieval position and the storing position by extending or retracting the rod 17 by controlling the rotation of the motor 32 with an electronic controller (not shown).

In the tongue retrieval system of this embodiment, a tongue retrieval sensor 36 that detects that the tongue 5 is retrieved from the tongue receiving member 18 by the occupant and outputs a tongue retrieval signal, is provided in the tongue receiving member 18, as illustrated in FIG. 3(a).

Further, although not shown, a seating sensor for detecting that the occupant is seated on the motor vehicle seat 2 is provided in the motor vehicle seat 2 and a door sensor for detecting opening or closing of the door is provided in the door. In addition, when the rod 17 is fully extended, the tongue receiving member 18 is arranged at the tongue retrieval position and when the rod 17 is fully retracted, the tongue receiving member 18 is arranged at the storing position. Further, a rod full extension sensor for detecting the maximum extension of the rod 17, and a rod full retraction sensor for detecting that the rod 17 is retracted to have its smallest length are provided in the rod 17. For these sensors, the heretofore known sensors can be used and the detailed explanation is omitted.

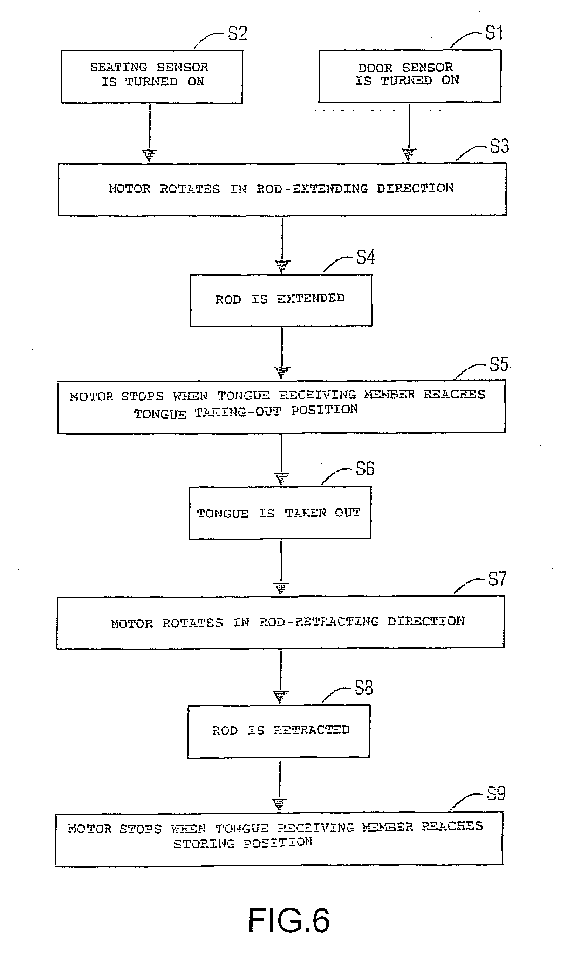

Furthermore, in the tongue retrieval system of this embodiment, the tongue receiving member 18 is automatically set at the tongue retrieval position or the storing position when a controller controls the drive of the motor 32 according to a flowchart showing the control of the motor drive, as illustrated in FIG. 6.

That is, as illustrated in FIG. 6, according to a door closing signal from the door sensor indicating that the door is closed in Step S1, and the seating signal from the seating sensor indicating that the occupant is seated in Step S2, the controller controls the motor 32 to rotate in a direction in which the rod 17 is extended in Step S3. Then, the rod is extended in Step S4. The motor 32 is stopped by the controller on the basis of the rod full extension signal from the rod full extension sensor, indicating that the rod 17 is extended to the maximum length and the tongue receiving member 18 reaches the tongue retrieval position in Step S5. On the other hand, the tongue 5 conveyed to the tongue retrieval position by the tongue receiving member 18 is retrieved by the occupant in Step S6, and the controller controls the motor 32 to rotate in a reverse direction; namely in a direction for retracting the rod 17, on the basis of the tongue retrieval signal output from the tongue retrieval sensor 36 in Step S7. Then, the rod 17 is retracted in Step S8. The controller stops rotation of the motor 32 on the basis of a rod full retraction signal from the rod full retraction sensor indicating that the rod 17 is retracted to have its shortest length, and the tongue receiving member 18 reaches the storing position in Step S9.

According to the tongue retrieval system of this embodiment, the rod 17 is retracted when the tongue 5 is retrieved from the tongue receiving member 18 by the occupant. Therefore, at a time when the tongue is inserted and latched with the buckle 6, the rod 17 is retracted and the tongue receiving member 18 is positioned at the storing position or the position adjacent to the storing position. Accordingly, when the occupant has completed latching the tongue 5 with the buckle 6 and takes off a hand from the seatbelt 4 and the tongue 5, the seatbelt 4 can be adjusted to properly tighten the seatbelt to the occupant and thereby preventing the occupant from sensing the discomfort.

Further, unless the occupant assuredly takes out the tongue 5 from the tongue receiving member 18, the tongue receiving member 18 is not transferred to the storing position behind the motor vehicle seat 2. By the aforementioned configuration, easiness of handling operation of the tongue 5 performed by the occupant can be further improved and assuredness of retrieval operation of the tongue 5 performed by the occupant can be improved.

Furthermore, because the rod 17 starts to extend on the basis of two signals of the door-close signal from the door sensor and the seating signal from the seating sensor, the rod 17 can start to extend only when the occupant is seated on the motor vehicle seat 2 and the door is closed. Thereby, even when the door is opened and closed while the occupant is not seated on the motor vehicle seat 2, the rod 17 can be prevented from being extended, and even when the occupant seated on the motor vehicle seat 2 changes his/her own seating posture (driving posture or riding posture) to take something or the like, while the door is closed, the rod 17 can be also prevented from extending, resulting in preventing a needless extension of the rod 17.

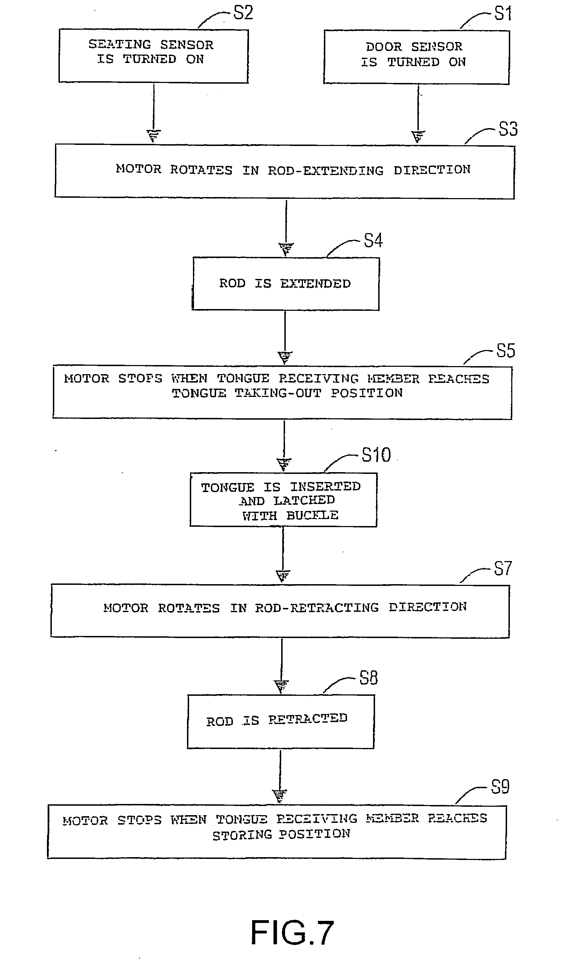

FIG. 7 is a flowchart showing a control of the motor drive of the tongue retrieval system of another embodiment.

In the above-described flowchart illustrated in FIG. 6, the controller controls the motor 32 to rotate in the direction for retracting the rod 17 via the tongue retrieval signal from the tongue retrieval sensor 36 indicating that the tongue 5 is retrieved from the tongue receiving member 18. However, in the tongue retrieval system of this embodiment, instead of the tongue retrieval sensor 36, a buckle switch (not shown) is used, as illustrated in FIG. 7. The buckle switch detects that the tongue 5 is inserted and latched with the buckle 6 and outputs the tongue latching signal. As for the buckle switch, the heretofore known buckle switch can be used and the detailed explanation is therefore omitted.

That is, similar to the above-described embodiment shown in FIG. 6, the tongue receiving member 18 reaches the tongue retrieval position and the motor 32 is stopped, in Step S5. Thereafter, the tongue 5 mounted on the tongue receiving member 18 is conveyed to the tongue retrieval position and the tongue 5 retrieved by the occupant is inserted and latched with the buckle 6, in Step S10. Then, the buckle switch detects that the tongue 5 is inserted and latched with the buckle 6 and outputs a tongue latching signal. The controller controls the motor 32 to rotate in a direction for retracting the rod 17, on the basis of the tongue latching signal from the buckle switch in Step S7, in the same manner as in the above-mentioned embodiment shown in FIG. 6.

The other flows and steps in the motor drive control as described in FIG. 7 in this embodiment are the same as in the above-described embodiment, shown in FIG. 6.

In the tongue retrieval system of this embodiment, the tongue receiving member 18 is kept at the tongue retrieval position until the tongue 5 is inserted and latched with the buckle 6. Accordingly, the tongue receiving member 18 is not yet transferred to the storing position even when the tongue 5 is retrieved from the tongue receiving member 18 by the occupant. Namely, the effect from S6 in FIG. 6 is not obtained. However, the other effects are the same as the ones shown in FIG. 6.

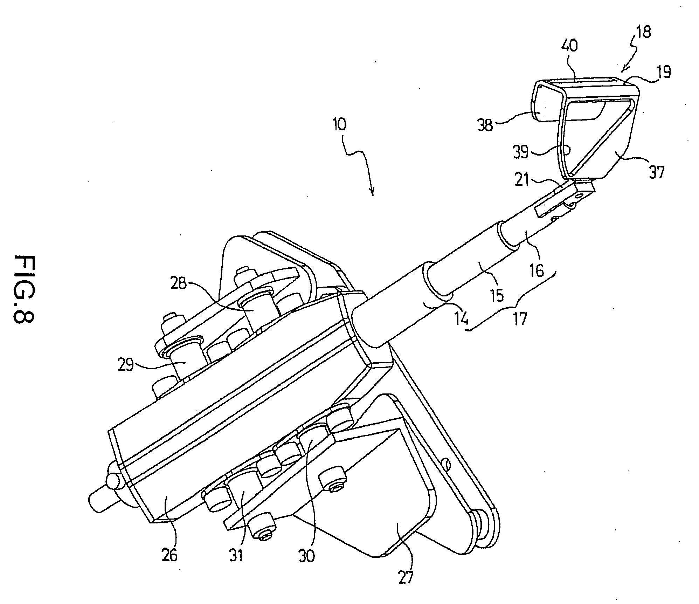

FIG. 8 is a perspective view partially illustrating another embodiment of the tongue retrieval assisting device of the present invention.

In the above-described embodiment, the telescopically retractable rod 17 is composed of the four rod members 13, 14, 15, and 16. However, in the tongue retrieval assisting device 10 of this embodiment shown in FIG. 8, the rod 17 is composed of three rod members 14, 15, and 16 in a telescopically retractable fashion. Accordingly, the rod 14 having the maximum diameter is attached to the attaching bracket 26 of the rod side.

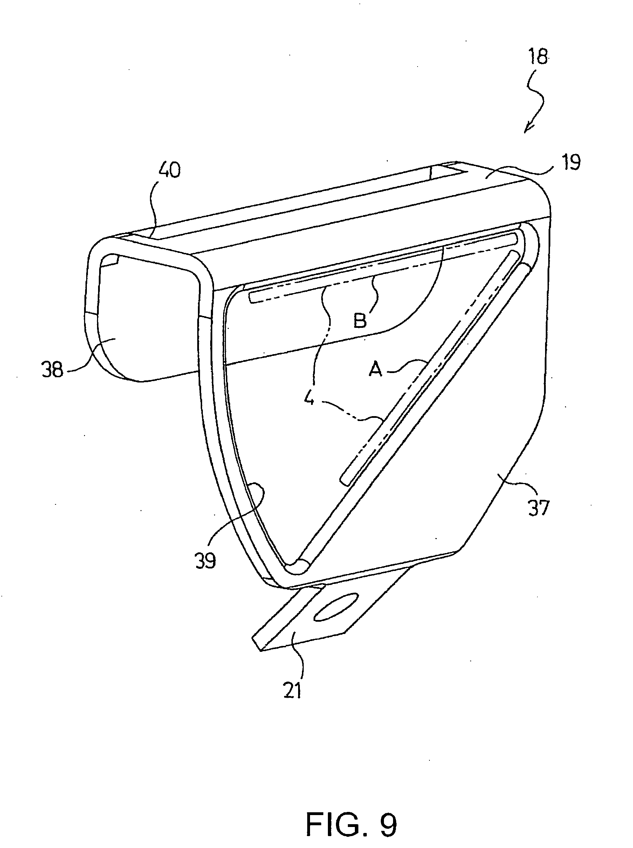

Further, in the above-described embodiment, as illustrated in FIGs. 3(a) through 3(c), the tongue receiving member 18 is provided with a tongue receiving plate 19 having an approximately circular shape. However, as illustrated in FIG. 8, in the tongue retrieval assisting device of this embodiment, the tongue receiving member 18 of this embodiment has an approximately U-shape, looking from side. In the detailed explanation, the tongue receiving member 18 is composed of a long side wall 37 having a relatively large length, a short side wall 38 having a relatively small length, and a tongue receiving plate 19 having a flat and an approximately rectangular shape for joining the side walls 37 and 38, which are formed together into an approximate U-shape, looking from a side, as illustrated in FIG. 9.

The long side wall 37 is provided with an attaching portion 21 at a lower part thereof, and similar to the above-described embodiment, the attaching portion 21 is attached to a tip end of the rod member 16 having the minimum diameter. In addition, at the lower end of the long side wall, a penetration hole 39 which is a relatively large sectorial shape is formed such that the seatbelt 4 slidably penetrates therethrough. When the tongue receiving member 18 is transferred from the storing position to the tongue retrieval position, the seatbelt 4 penetrates the penetration hole 39 from a state with its face in an inclined state shown by a mark A, to in an approximately horizontal state shown by a mark B. On the other hand, when the tongue receiving member 18 is transferred from the tongue retrieval position to the storing position, the seatbelt 4 penetrates the penetration hole 39 from a state with its face in an approximately horizontal state shown by a mark B, to in an inclined state shown by a mark A. Therefore, at the time when the tongue receiving member 18 is transferred, the inclination of the face of the seatbelt 4 can be smoothly changed by thus forming the penetration hole 39 into the sectorial shape.

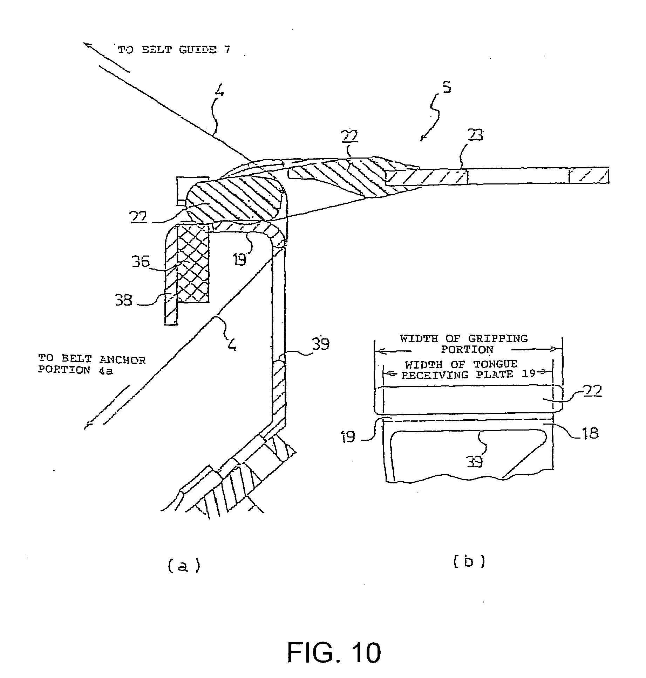

The width (the length in a belt-width direction) of the tongue receiving plate 19 having a rectangular shape is set smaller than the width (the length in a belt-width direction) of the gripping portion 22. Therefore, as illustrated in FIG. 10(a), in a state in which the tongue receiving member 18 is set at the tongue retrieval position and the gripping portion 22 of the tongue 5 is mounted on the tongue receiving plate 19a as illustrated in FIG. 10(a), a left-and-right edge of the gripping portion 22 projects outside of the left-and-right edge of the tongue receiving plate 19, as illustrated in FIG. 10(b). As a result, similar to the above-described embodiment, when the occupant grips the gripping portion 22 of the tongue 5, the tongue receiving plate 19 is prevented from being gripped together with the gripping portion 22.

Furthermore, in a state in which the gripping portion 22 of the tongue 5 is mounted on the tongue receiving plate 19 shown in FIG. 10(a), the gripping portion 22 is pressed onto the relatively wide and flat tongue receiving face 19a of the tongue receiving plate 19 by belt-retracting force of the seatbelt retractor 3. Accordingly, similar to the above-described embodiment, the gripping portion 22 is assuredly mounted onto the tongue receiving plate 19 and the tongue 5 is stably mounted onto the tongue receiving member 18.

Furthermore, in the tongue receiving plate 19, an attaching hole 40 which has a rectangular shape and penetrates from above to below is drilled. As illustrated in FIG. 10(a), in the attaching hole 40, a tongue retrieval sensor 36 is mounted. In a state in which the tongue receiving member 18 is set to the tongue retrieval position, whereas the tongue 5 is not retrieved by the occupant yet and is mounted on the tongue receiving plate 19 of the tongue receiving member 18, the gripping portion 22 of the tongue 5 is in contact with the tongue retrieval sensor 36, and the tongue retrieval sensor 36 does not output the tongue retrieval signal. When the tongue 5 is retrieved by the occupant, because the gripping portion 22 is released from the tongue retrieval sensor 36, the tongue retrieval sensor 36 outputs the tongue retrieval signal.

In accordance with the tongue retrieval assisting device 10 of this embodiment in which the tongue receiving plate 19 is formed into a rectangular shape, a gripping portion having a rectangular shape of the heretofore known and commonly used tongue can be effectively mounted on a tongue receiving plate 19 fitting with the rectangular shape of the tongue receiving plate 19. As a result, it is not necessary to form the gripping portion 22 of the tongue 5 into a special shape and the tongue receiving plate 19 is applicable for the heretofore known commonly used tongue.

The other configurations and effects of this embodiment are the same as the ones of the above-described embodiment. In addition, the other configurations and effects of the seatbelt apparatus using the tongue retrieval assisting device 10 of this embodiment are the same as the ones of the above-described embodiment.

Furthermore, the tongue retrieval sensor 36 or the buckle switch for detecting the retrieval operation of the tongue, which are used in each of the above-described embodiments as an output device for outputting a trigger signal so as to rotate the motor 32 in the direction for retracting the extended rod 17, do not always need to be provided and may be omitted. In this case, the rotation of the motor can be started by manual switching. However, in consideration of easiness of handling operation of the tongue 5 or wearability for the seatbelt 4, it is preferable to automatically transfer the tongue receiving member 18 between the storing position and the tongue retrieval position as mentioned in each of the above-described embodiments.

Furthermore, both the elongated penetration hole 20 for slidably penetrating the seatbelt 4, shown in FIG. 3(b), and the sectorial penetration hole 39, shown in FIG. 9, are formed into a closed end. However, when a part of these penetration holes 20 and 39 has an opening outwardly, the seatbelt 4 can also be thereby inserted through the opening into these penetration holes 20 and 39 with ease. This allows easy insertion for the seatbelt 4 into the penetration holes 20 and 39.

Furthermore, in the above-described embodiment, the tongue retrieval assisting device 10 is attached to the motor vehicle seat 2. However, the present invention is not limited to this configuration and the tongue retrieval assisting device 10 can be also provided in a floor portion of the body of the vehicle, or the like.

A tongue retrieval assisting device and a seatbelt apparatus using the tongue retrieval assisting device may be installed on motor vehicles such as an automobile or the like, and are provided for protecting an occupant by restraining the occupant with the seatbelt. This invention is also preferably applicable to the seatbelt apparatus in which the seatbelt is worn by the occupant seated on a motor vehicle seat by inserting and latching the tongue slidably supported by the seatbelt into the buckle fixed on a body of a vehicle.

## Claims

1. A tongue retrieval assisting device for conveying a tongue (5) slidably supported by a seatbelt (4) to a tongue retrieval position set in front of an occupant seated on a motor vehicle seat (2),
wherein a conveying device (11) for conveying the tongue (5) to the tongue retrieval position is attached through an elastic mount (26-31).

2. The tongue retrieval assisting device according to Claim 1, wherein the elastic mount is a rubber mount (28-31).

3. The tongue retrieval assisting device according to any one of Claims 1 or 2, wherein the conveying device (11) comprises a rod (17) telescopically and extendably composed of a plurality of rod members (13-16; 14-16).

4. A tongue retrieval assisting device according to any one of Claims 1-3,
wherein the conveying device (11) is attached to a first attachment bracket (26), the first attachment bracket (26) being elastically attached to a second attachment bracket (27), which is attached to a motor vehicle component.

5. A tongue retrieval assisting device according to Claim 4,
wherein the first attachment bracket (26) and the second attachment bracket (27) are elastically attached to one another by a plurality of rubber mounts.

6. A tongue retrieval assisting device according to Claims 4 or 5,
wherein the second attachment bracket (27) is attached to a side portion of said motor vehicle seat (2).

7. A tongue retrieval assisting device according to Claims 4 or 5,
wherein the second attachment bracket (27) is attached to a floor portion of the vehicle.

8. A tongue retrieval assisting device according to any one of Claims 4-7 and Claim 3,
wherein the rod member having maximum diameter (13; 14) is attached to the first attachment bracket (26).

9. A seatbelt apparatus, comprising, at least, a seatbelt (4) for fastening an occupant; a seatbelt retractor (3) mounted on a motor vehicle for constantly biasing the seatbelt in a direction for retracting the seatbelt (4); a tongue (5) slidably supported by the seatbelt (4); and a buckle (6) mounted on the motor vehicle, being latched with the tongue (5) inserted thereinto,
wherein, the seatbelt apparatus further includes the tongue retrieval assisting device (10) of any one of Claims 1 through 8.
